Europäisches Patentamt

European Patent Office

Office européen des brevets

(11) Veröffentlichungsnummer: **0 253 968**
**B1**

# (12) EUROPÄISCHE PATENTSCHRIFT

(45) Veröffentlichungstag der Patentschrift:
07.03.90

(51) Int. Cl.⁴: **F16B 21/18**

(21) Anmeldenummer: 87106465.5

(22) Anmeldetag: 05.05.87

(54) Verfahren zum axialen Festlegen eines Bauteiles auf einer Welle bzw in einer Bohrung.

(30) Priorität: 25.07.86 DE 3625148

(43) Veröffentlichungstag der Anmeldung:
27.01.88 Patentblatt 88/4

(45) Bekanntmachung des Hinweises auf die Patenterteilung:
07.03.90 Patentblatt 90/10

(84) Benannte Vertragsstaaten:
BE DE ES FR GB IT NL SE

(56) Entgegenhaltungen:
DE-A- 1 400 758
DE-A- 2 459 944
DE-B- 2 204 831
FR-A- 1 071 376
US-A- 2 888 852

(73) Patentinhaber: FORD-WERKE AKTIENGESELLSCHAFT,
Werk Köln-Niehl Henry-Ford-Strasse Postfach 60 40 02,
D-5000 Köln 60(DE)
(84) Benannte Vertragsstaaten: BE DE IT NL SE

(73) Patentinhaber: FORD MOTOR COMPANY LIMITED,
Eagle Way, Brentwood Essex CM13 3BW(GB)
(84) Benannte Vertragsstaaten: GB

(73) Patentinhaber: FORD FRANCE SOCIETE ANONYME,
344 Avenue Napoléon Bonaparte B.P. 307, F-92506 Rueil
Malmaison Cedex(FR)
(84) Benannte Vertragsstaaten: FR

(73) Patentinhaber: Ford Motor Company, The American
Road, Dearborn, MI 48121(US)
(84) Benannte Vertragsstaaten: ES

(72) Erfinder: Szukay, Hans-Joachim, Kempershäuschen 5,
D-5060 Berg.-Glachbach(DE)
Erfinder: Maul, Wilhelm, Dachsweg 28,
D-5000 Köln 40(DE)

(74) Vertreter: Ritzkowsky, Harald, Dipl.-Ing., Ford-Werke
Aktiengesellschaft Patentabteilung NH/DRP

## Beschreibung

Die Erfindung bezieht sich auf ein Verfahren zum axialen Festlegen eines Bauteiles auf einer Welle bzw. in einer Bohrung der im Oberbegriff des Patentanspruches erläuterten Art.

Aus der US-A 2 888 852 ist ein Verfahren zum axialen Festlegen eines Bauteiles auf einer Welle bzw. in einer Bohrung mittels einer benachbart dem Bauteil in der Welle bzw. in der Bohrung ausgebildeten Ringnut und einem darin angeordneten geschlossenen Sicherungsring von etwas größerem Innendurchmesser als dem Wellendurchmesser bzw. etwas geringerem Außendurchmesser als dem Bohrungsdurchmesser bekannt. Der geschlossene Sicherungsring ist hierbei an mehreren Stellen durch radiale Einschnitte, die abwechselnd von aussen nach innen bzw. von innen nach außen verlaufen, so weit geschwächt, daß durch ein an Teilbereichen seines Umfanges radial einwirkendes Werkzeug diese Stellen plastisch verformt werden können, wodurch der Sicherungsring radial spielfrei in die Ringnut an der Welle oder in der Bohrung verspannt werden kann.

Dieses bekannte Verfahren zum axialen Festlegen eines Bauteiles weist den Nachteil auf, daß, da sich die plastische Verformung lediglich an den durch die radialen Einschnitte geschwächten Stellen auswirkt, die plastische Verformung nicht zu einer Verbreiterung des Sicherungsringes in den durch das Werkzeug belasteten Teilbereichen führt und der Sicherungsring daher die Ringnut in axialer Richtung nicht spielfrei ausfüllen kann.

Darüber hinaus weist der bekannte Sicherungsring den Nachteil auf, daß er bei einer erforderlich werdenden Demontage nicht mit einfachen Werkzeugen entfernt werden kann.

Die Aufgabe der Erfindung ist es, ein Verfahren zum axialen Festlegen eines Bauteiles auf einer Welle bzw. in einer Bohrung der im Oberbegriff des Patentanspruches erläuterten Art derart zu verbessern, daß das axiale Festlegen des Bauteiles durch den Sicherungsring sowohl in radialer als auch in axialer Richtung spielfrei erfolgen kann und daß der Sicherungsring bei einer erforderlich werdenden Demontage mit einfachen Werkzeugen entfernt werden kann.

Gemäß der Erfindung wird diese Aufgabe gelöst, indem bei einem Verfahren nach dem Oberbegriff des Patentanspruches die im Kennzeichenteil des Patentanspruches aufgezeigten Maßnahmen angewendet werden.

Dadurch, daß der geschlossene Sicherungsring vor der plastischen Verformung einen über den Umfang gleichförmigen Querschnitt aufweist und an den Teilbereichen seines Umfanges an zwei, drei, vier oder mehr Stellen, wobei die genaue Anzahl in Abhängigkeit vom Durchmesser des Sicherungsringes und den gewünschten Sicherungskräften entsprechend ausgelegt wird, derart radial einwärts oder auswärts verformt wird, daß er in diesen Teilbereichen die Ringnut radial und axial spielfrei ausfüllt und er in den dazwischenliegenden Teilbereichen sich von der Ringnut abhebende Wölbungen bildet, kann der Sicherungsring mit geringstem Material- und Arbeitseinsatz als Preßteil aus einem entsprechenden Blechmaterial oder bei höheren Belastungen aus nahtlosem Rohr hergestellt werden und dennoch durch die spielfreie Ausfüllung der Ringnut eine zuverlässige Sicherung von hoher Abzugsfestigkeit für das Bauteil bilden. Durch die sich zwischen den plastisch verformten Teilbereichen ergebenden abgehobenen Wölbungen ist eine Demontage des erfindungsgemäßen Sicherungsringes mit einfachen Werkzeugen, wie z.B. einem Meissel, möglich, da an dieser Stelle der geschlossene Sicherungsring einfach durchtrennt werden kann.

Dadurch, daß die benachbart dem zu sichernden Bauteil in der Welle ausgebildete Ringnut als eine Standard-Ringnut ausgebildet ist und der erfindungsgemäße plastisch verformte geschlossene Sicherungsring, der mit einer doch etwas aufwendigeren im radial plastisch verformenden Einrichtung in der Großserie montiert wird, bei einer erforderlich werdenden Reparatur mit einfachen Werkzeugen, z.B. mit Hilfe eines Meissels und einer entsprechenden Zange aus der Ringnut entfernt werden kann, kann das erfindungsgemäße Verfahren zum axialen Festlegen von Bauteilen, z.B. innerhalb eines Kraftfahrzeug-Wechselgetriebes in der Großserie im Herstellerwerk kostengünstig angewendet werden und dennoch wird sichergestellt, daß im Reparaturfall die entsprechende Werkstätte die gesicherten Bauteile durch Lösen des Sicherungsringes austauschen kann und durch Verwendung von Standard-Sicherungs- oder Spreng-Ringen die ausgetauschten neuen Bauteile zuverlässig montieren und sichern kann.

Das erfindungsgemäße Verfahren wird anhand zweier in den Zeichnungen gezeigten Ausführungsbeispiele näher erläutert.

Es zeigt:

Figur 1 einen Schnitt durch eine Festlege-Anordnung mittels eines Standard-Sicherungs- oder Spreng-Ringes;

Figur 2 eine Festlege-Anordnung mittels eines erfindungsgemäßen geschlossenen Sicherungsringes, der in seinem unverformten Zustand während des Aufsetzens in gestrichelten Linien, in seiner anliegenden Lage kurz vor der radialen Verformung in Strich-Punkt-Linien angedeutet ist.

Figur 3 zeigt eine Ansicht des verformten Sicherungsringes in Achsrichtung;

Figur 4 zeigt eine Festlege-Anordnung eines Bauteiles innerhalb einer Bohrung mittels eines Standard-Sicherungs- oder Spreng-Ringes;

Figur 5 einen Schnitt durch eine Festlege-Anordnung in einer Bohrung mittels eines erfindungsgemäßen Sicherungsringes und

Figur 6 eine Ansicht des verformten Sicherungsringes in Achsrichtung.

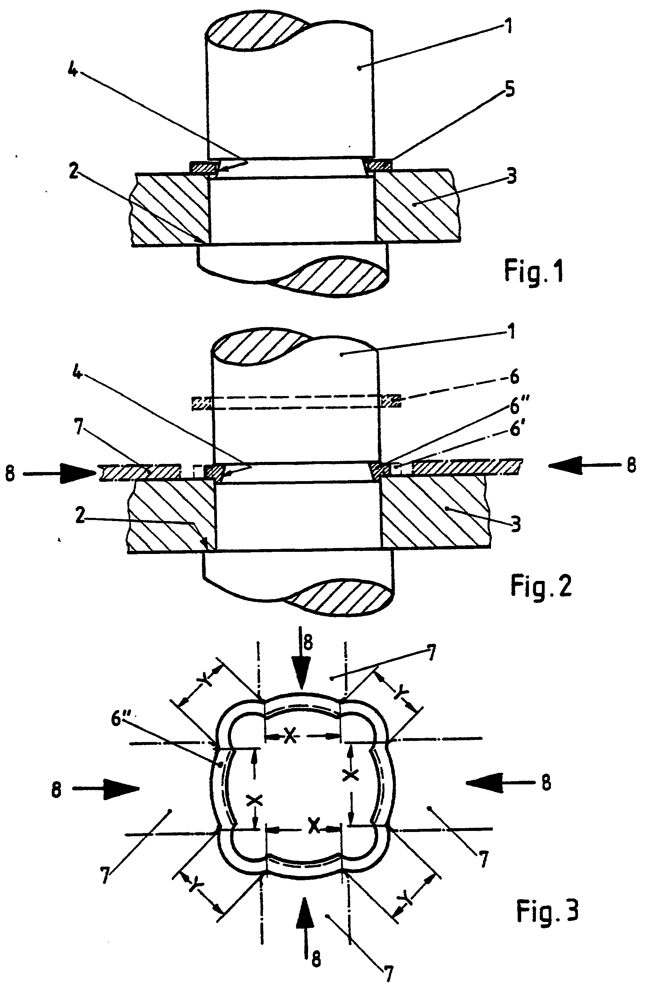

Bei der in Figur 1 gezeigten Festlege-Anordnung ist an einer Welle 1 ein Ansatz 2 vorgesehen, an dem sich ein Bauteil 3, z.B. ein Zahnrad oder dergleichen, anlegen soll. Benachbart dem Bauteil 3 ist eine Ringnut 4 in der Welle 1 ausgebildet, die einen Querschnitt aufweist, wie er für die Aufnahme eines Standard-Sicherungs- oder Spreng-Ringes 5 erforderlich und in verschiedenen Ausführungsformen bekannt ist. Will man eine solche Festlege-Anordnung spielfrei gestalten, so muß man entweder mit Paß-Sicherungs- oder Spreng-Ringen arbeiten oder aber Sicherungs- oder Spreng-Ringe mit keilförmigen Querschnitten benutzen.

In beiden Fällen ist der hierfür erforderliche Material-und insbesondere der Montageaufwand verhältnismäßig hoch und insbesondere durch fehlende Sorgfalt bei der Montage können erhebliche Mängel auftreten.

Bei der in Figur 2 gezeigten Festlege-Anordnung ist die gleiche Welle 1 mit der gleichen Schulter oder dem Ansatz 2 versehen und nimmt das gleiche Bauteil 3 auf. Die benachbart dem Bauteil 3 ausgebildete Ringnut 4 ist ebenfalls gleich und entspricht der Standard-Ringnut, wie sie für die Aufnahme eines Standard-Sicherungs- oder SprengRinges üblich ist.

Ein erfindungsgemäßer, geschlossener Sicherungsring 6 ist in seinem unverformten Zustand während des Aufschiebens auf die Welle 1 in gestrichelten Linien gezeigt und weist einen etwas größeren Innendurchmesser als der Wellendurchmesser auf. Die axiale Breite des Sicherungsringes 6 ist etwas geringer als die axiale Breite der Ringnut. Sobald der Sicherungsring 6 am zu sichernden Bauteil 3 anliegt, diese Lage ist in Strich-Punkt-Linien 6' angedeutet, wird über ein an sich bekanntes radial wirkendes Werkzeug 7 der geschlossene Sicherurngsring 6 an Teilbereichen X seines Umfanges radial nach einwärts in Richtung der Pfeile 8 plastisch verformt. Die Verformung erfolgt in einem Ausmaß, daß die Teilbereiche X des Sicherungsringes 6'' so stark plastisch verformt werden, daß sie den gesamten Querschnitt der Ringnut spielfrei ausfüllen. Durch die radiale Materialverlagerung der Teilbereiche X des Sicherungsringes 6'' entstehen an dazwischen liegenden Teilbereichen Y sich von der Ringnut abhebende Wölbungen, die für die erwünschte spätere Demontagemöglichkeit von wesentlicher Bedeutung sind.

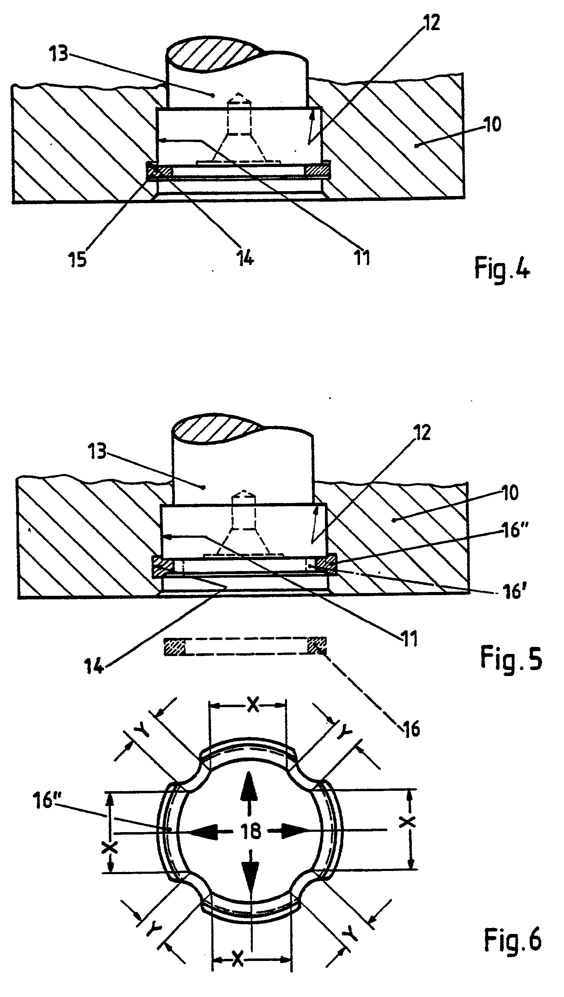

Bei der in Figur 4 gezeigten Festlege-Anordnung ist in einem Bauteil 10 eine Bohrung 11 ausgebildet, die eine Schulter oder einen Ansatz 12 aufweist. Eine in die Bohrung 11 eingesetzte Welle 13 wird an einer Ringnut 14 mittels eines Standard-Sicherungs- oder Spreng-Ringes 15'' festgelegt.

Will man eine solche Festlege-Anordnung spielfrei gestalten, muß man wieder mit Paß-Sicherungsringen nach entsprechendem Ausmessen der Toleranzen arbeiten bzw. muß Sicherungsringe mit keilförmigen Querschnitt einsetzen.

Bei der in Figur 5 gezeigten erfindungsgemäßen Festlege-Anordnung ist wieder in einem Bauteil 10 die gleiche Bohrung 11 mit der gleichen Standard-Ringnut 14 vorgesehen und es soll die gleiche Welle 13 spielfrei montiert werden.

Hierzu wird ein erfindungsgemäßer, geschlossener Sicherungsring 16 verwendet, dessen Außendurchmesser etwas geringer als der Durchmesser der Bohrung 11 ist und dessen axiale Breite etwas geringer als die Breite der Ringnut 14 ist. Der geschlossene Sicherungsring 16 ist in seinem unverformten Zustand vor dem Einsetzen in die Bohrung 11 in gestrichelten Linien gezeichnet. Sobald der Sicherungsring 16 sich in der in Strich-Punkt-Linien gezeichneten Lage 16' - befindet, wird über ein radial wirkendes Werkzeug (nicht gezeigt) in Richtung der Pfeile 18 in Figur 6 eine Kraft auf Teilbereiche X des Sicherungsringes 16'' ausgeübt, daß diese Teilbereiche soweit plastisch verformt werden, daß sie die Ringnut spielfrei ausfüllen. Durch die Materialverdrängung ergeben sich in dazwischenliegenden Teilbereichen Y sich von der Ringnut abhebende Wölbungen, die wieder für die erwünschte Demontagemöglichkeit des Sicherungsringes mit einfachen Werkzeugen wesentlich sind.

Bei den in den Zeichnungen gezeigten Ausführungsbeispielen ist der Sicherungsring 6 bzw. 16 an jeweils 4 Teilbereichen eines Umfanges radial plastisch verformt worden. Selbstverständlich kann die Anzahl der Teilbereiche für eine radiale Verformung in Abhängigkeit vom Durchmesser des Sicherungsringes und den gewünschten Sicherungskräften entsprechend ausgelegt werden. So sind selbstverständlich neben geraden Anzahlen von Teilbereichen auch ungerade Anzahlen von Teilbereichen ohne weiteres möglich. Bei der Wahl der Anzahl der Teilbereiche sollte jedoch darauf geachtet werden, daß die durch die Materialverdrängung sich ergebenden Hochwölbungen ausreichend groß sind, damit entsprechende einfache Werkzeuge zum Trennen des Sicherungsringes angreifen können.

## Patentansprüche

Verfahren zum axialen Festlegen eines Bauteiles auf einer Welle bzw. in einer Bohrung mittels einer benachbart dem Bauteil in der Welle oder der Bohrung ausgebildeten Ringnut von einem Querschnitt zur Aufnahme eines genormten oder handelsüblichen Sicherungs- oder Sprengringes und einem geschlossenem Sicherungsring von etwas größerem Innendurchmesser als der Wellendurchmesser bzw. etwas kleinerem Außendurchmesser als der Bohrungsdurchmesser und einer größeren radialen Stärke als die Tiefe der Ringnut und eine etwas geringere axiale Breite als die Breite der Ringnut, der über ein an Teilbereichen seines Umfanges radial wirkendes Werkzeug unter plastischer Verformung in die Ringnut eingepreßt und dadurch radial spielfrei verspannt ist, dadurch gekennzeichnet, daß

— der geschlossene Sicherungsring (6 bzw. 16) vor der plastischen Verformung einen über den Umfang gleichförmigen Querschnitt aufweist und an den Teilbereichen (X) seines Umfanges an zwei, drei, vier oder mehr Stellen, wobei die genaue Anzahl in Abhängigkeit vom Durchmesser des Sicherungsringes und den gewünschten Sicherungskräften entsprechend ausgelegt wird, derart radial einwärts oder auswärts verformt wird, daß er in diesen Teilbereichen (X) die Ringnut (4 bzw. 14) radial und axial spielfrei ausfüllt und er in den dazwischenliegenden Teilbereichen (Y) sich von der Ringnut (4 bzw. 14) abhebende Wölbungen bildet.

## Claims

A method of axially securing a component on a shaft or in a bore by means of an annular groove – formed adjacent the component in the shaft or the bore – of a cross-section for receiving a standardized or commercially available retaining ring or circlip and by means of a closed retaining ring of an internal diameter somewhat greater than the diameter of the shaft or an external diameter somewhat smaller than the diameter of the bore respectively and having a radial thickness greater than the depth of the annular groove and an axial width somewhat smaller than the width of the annular groove, which [ring] is pressed into the annular groove with plastic deformation by way of a tool acting radially upon partial areas of its periphery and is clamped axially thereby without play, characterized in that before the plastic deformation the closed retaining ring (6 and 16 respectively) has a cross-section uniform over the periphery and is deformed radially inwards or outwards on the partial areas (X) of its periphery at two, three, four or more places – the exact number being set in accordance with the diameter of the retaining ring and the desired retaining forces – in such a way that in these partial areas (X) it fills the annular groove (4 and 14 respectively) radially and axially without play and in the intermediate partial areas (Y) it forms convex portions rising up from the annular groove (4 and 14 respectively).

## Revendications

Procédé de fixation axiale d'une pièce sur un arbre ou dans un alésage au moyen d'une gorge annulaire, ménagée dans l'arbre ou l'alésage au voisinage de la pièce et possédant une section transversale permettant de recevoir un circlip ou jonc normalisé ou du commerce, et d'un circlip fermé, qui est d'un diamètre intérieur légèrement plus grand que le diamètre de l'arbre ou d'un diamètre extérieur légèrement inférieur au diamètre de l'alésage et qui est d'une épaisseur radiale supérieure à la profondeur de la gorge annulaire et d'une largeur axiale légèrement plus faible que la largeur de cette gorge annulaire, ce circlip étant introduit de force dans la gorge annulaire, moyennant une certaine déformation plastique, à l'aide d'un outil agissant radialement sur des zones partielles de son étendue circonférentielle, et y étant ainsi serré sans jeu dans le sens radial, caractérisé en ce que le circlip fermé (6 ou 16) comporte, avant la déformation plastique, une section transversale uniforme sur toute son étendue circonférentielle et peut être déformé radialement vers l'intérieur ou vers l'extérieur sur les zones partielles (X) de son étendue circonférentielle, en deux, trois ou quatre emplacements ou plus, le nombre exact étant déterminé d'une manière appropriée en fonction du diamètre du circlip et des efforts voulus de fixation, cette déformation du circlip étant telle que, dans ces zones partielles (X), il remplit la gorge annulaire (4 ou 14) sans jeu ni radial, ni axial et que, dans les zones partielles (Y) situées entre celles-ci, il forme des parties bombées s'élevant par rapport à la gorge annulaire (4 ou 14).

Fig.1

Fig.2

Fig.3

Fig.4

Fig.5

Fig.6